# EUROPÄISCHE PATENTSCHRIFT

(11) **EP 2 207 972 B1**
(45) Veröffentlichungstag und Bekanntmachung des Hinweises auf die Patenterteilung: **08.08.2012**
(21) Anmeldenummer: 08839822.7
(22) Anmeldetag: 14.10.2008
(51) Int. Cl.: F16B 2/04, F16B 4/00, F16B 19/12, F16C 13/00, F16D 1/08

(54) **KURVENROLLE ZUR BEFESTIGUNG IN EINER SACKLOCHBOHRUNG ODER EINER DURCHGANGSBOHRUNG**
GUIDE ROLLER FOR FIXING IN A BLIND HOLE OR A THROUGHBORE
GALET DE CAME DESTINÉ À ÊTRE FIXÉ DANS UN TROU BORGNE OU DANS UN TROU DÉBOUCHANT

(30) Priorität: 18.10.2007 DE 102007049901
(43) Veröffentlichungstag der Anmeldung: 21.07.2010
(73) Patentinhaber: Schaeffler Technologies AG & Co. KG, 91074 Herzogenaurach (DE)
(72) Erfinder: LUNZ, Erich, 91475 Lonnerstadt (DE)
(86) Internationale Anmeldenummer: PCT/EP2008/063761
(87) Internationale Veröffentlichungsnummer: WO 2009/050150

(56) Entgegenhaltungen:
- EP-A1- 0 394 186
- DE-A1- 3 207 921
- DE-U1- 9 408 956
- US-A- 4 106 826

## Beschreibung

Die Erfindung betrifft eine Kurvenrolle zur Befestigung in einer Sacklochbohrung oder einer Durchgangsbohrung einer Anschlusskonstruktion gemäß dem Oberbegriff des Anspruchs 1 bzw. des Anspruchs 9. Im Sinne der vorliegenden Erfindung sollen die Begriffe Sacklochbohrung bzw. Durchgangsbohrung als beliebige, glattwandige Öffnungen zur Aufnahme eines glattwandigen Zapfens der Kurvenrolle in der Anschlusskonstruktion verstanden werden. Denkbar sind dabei auch nicht kreisrunde Querschnitte dieser Öffnung, soweit der Zapfen an den Öffnungsquerschnitt angepasst ist.

Kurvenrollen sind Nadel- bzw. Zylinderrollenlager mit einem dickwandigen Außenring. Kurvenrollen haben anstelle eines Innenrings einen massiven Rollenzapfen, der in der Regel mit einem Gewinde versehen ist. Die axiale Führung des Außenrings erfolgt durch einen festen Bund am Rollenzapfen und eine auf den Rollenzapfen aufgepresste Anlaufscheibe bzw. über den Rollensatz. Kurvenrollen können in allen Arten von Kurvengetrieben, Führungsbahnen, Förderanlagen eingesetzt werden. Derartige Kurvenrollen sind beispielsweise in der DE 43 22 554 A1, der DE 44 42 184 C2 sowie der DE 195 29 238 A1 beschrieben. Weitere Vorrichtungen mit durch Rollen oder Nadeln gelagerten Außenringen sind beispielsweise aus der EP 0 394 186 A1 sowie aus der US 4,106,826 A bekannt. Diese Vorrichtungen weisen jeweils einen Zapfen zur Befestigung der gesamten Vorrichtung an einer Umgebungskonstruktion auf. Befestigungs- oder Zentriervorrichtungen für im Wesentlichen rotationssymmetrische Teile sind zum Beispiel aus der DE 94 08 956 U1 sowie aus der DE 32 07 921 A1 bekannt.

Zur Befestigung von Kurvenrollen an Anschlusskonstruktionen, wie beispielsweise Trägern, gibt es verschiedene Möglichkeiten. Bei der Befestigung in einer Durchgangsbohrung wird die Kurvenrolle mittels Schraubenmutter auf der hinten liegenden Seite der Anschlusskonstruktion verschraubt. Der

WO 2007/068595 A1 kann die Befestigung einer, ein Wälzlager aufweisenden Umlenkrolle in einer Durchgangsbohrung eines Maschinenteils entnommen werden. Zur Befestigung der Umlenkrolle dient ein in den Innenring des Wälzlagers eingesetzter Schraubenbolzen, welcher im Einbauzustand über ein zum Wälzlager axial versetzt positioniertes Mehrkantprofil in eine korrespondierende Aufnahme des Maschinenteils eingreift. Der Schraubenbolzen wird an seinem aus der Rückseite des Maschinenteils herausragendem Ende mit einer Flanschmutter verschraubt.

Für die Befestigung in einem Sackloch ist die vorstehend beschriebene Befestigungsmethode nicht geeignet, da für die Verschraubung eine Zugänglichkeit von der Rückseite der Anschlusskonstruktion erforderlich ist. Die Befestigung in Sacklöchern erfolgt heutzutage zumeist dadurch, dass ein mit einem Gewinde versehener Rollenzapfen der Kurvenrolle in ein korrespondierendes Innengewinde in der Anschlusskonstruktion geschraubt wird. Nachteilig an dieser Lösung ist, dass das Einbringen eines Gewindes in die Anschlusskonstruktion relativ aufwendig und somit auch teuer ist. Außerdem ist diese Befestigungsweise nicht absolut sicher und zuverlässig, da es aufgrund der beträchtlichen mechanischen Belastungen, welcher die Kurvenrolle langfristig ausgesetzt ist, zu einer Lockerung der Verschraubung kommen kann.

Aus der DE 690 04 477 T2 ist die Befestigung einer Rolle in einer Durchgangsbohrung oder in einer Sacklochbohrung eines Trägers bekannt. Der Rollenzapfen weist einen rohrförmigen Schaft auf, in dem ein Gewindestift angeordnet ist. Durch den Gewindestift wird ein Zwischenelement geführt, welches einen radialen Druck auf den Endbereich des rohrförmigen Schafts ausübt und dadurch die Blockierung des Schafts in der Bohrung eines Trägers bewirkt. Der Endbereich des rohrförmigen Schafts weist eine innere konische Form auf. Das Zwischenelement ist ein kegelstumpfförmiger Ring, der in einem Raum zwischen dem rohrförmigen Schaft und dem Stift angebracht ist. An dem zum Bund hin gerichteten Schaftende befindet sich eine Scheibe, welche zur Auflage für die Rolle dient und dadurch deren Drehung ermöglicht, wenn die Rolle gegen den Träger drückt. Beim Festziehen des Gewindestiftes bewegt sich das Zwischenstück in Richtung Bundbereich und bewirkt durch die dadurch hervorgerufene elastische Verformung des Endbereichs eine Vergrößerung des Au-βendurchmessers des Endbereichs, wodurch sich eine mechanische Blockierung der Rolle in dem Sackloch des Trägers ergibt. Die in dieser Druckschrift vorgeschlagene Lösung ist relativ aufwendig und damit auch teuer. Außerdem könnte es Probleme bereiten, ein Mitdrehen des Rollenzapfens beim Festziehen des Gewindestiftes zu verhindern.

Die Aufgabe der vorliegenden Erfindung besteht darin, eine verbesserte Kurvenrolle zur Verfügung zu stellen, welche in einem Sackloch einer Anschlusskonstruktion sicher befestigt werden kann, wobei zur Befestigung weder ein Gewinde in der Anschlusskonstruktion noch ein Außengewinde am Rollenzapfen erforderlich sein soll, und wobei mit relativ wenigen Bauteilen eine kostengünstige Lösung realisiert werden soll.

Zur Lösung der erfindungsgemäßen Aufgabe dient einerseits eine Kurvenrolle gemäß dem beigefügten Anspruch 1. Die erfindungsgemäße Kurvenrolle zeichnet sich dadurch aus, dass der Schaft einen sich durch den gesamten Schaft in axialer Richtung erstreckenden Hohlraum aufweist, wobei dieser Hohlraum zumindest in dem vom Bund weggerichteten Endbereich des Schaftes mit einem Spreizmedium gefüllt ist. Weiterhin ist erfindungswesentlich, dass in dem Hohlraum ein in axialer Richtung verschiebbarer Kolben angeordnet ist, wobei der Kolben vom Bund ausgehend vor dem Spreizmedium angeordnet ist. Der Kolben steht mit einem Betätigungsmittel in Verbindung.

Ein wesentlicher Vorteil der vorliegenden Erfindung besteht darin, dass eine sichere und dauerhafte Verbindung zwischen Kurvenrolle und Anschlusskonstruktion hergestellt werden kann, ohne dass eine Zugänglichkeit von der Montagerückseite erforderlich ist. Die vorgeschlagene Lösung eignet sich somit besonders gut zur Montage einer Kurvenrolle in einer Sacklochbohrung. Zur Montage wird kein Gewinde in der Anschlusskonstruktion und kein Außengewinde am Rollenzapfen benötigt, was nicht zu letzt auch zu wesentlichen Kosteneinsparungen führt. Die erfindungsgemäße Kurvenrolle lässt sich mit vergleichsweise geringem Aufwand montieren. Nachdem sie im Sackloch der Anschlusskonstruktion platziert wurde, wird der Kolben mit Hilfe des Betätigungswerkzeuges in Richtung Spreizmedium bewegt, welches hierdurch unter Druck gesetzt wird. Hierbei wird durch das Spreizmedium eine Druckkraft auf den Innendurchmesser des vom Bundende weggerichteten Schaftendes ausgeübt. Es kommt zum Aufweiten des Schaftendes, wodurch sich ein fester Sitz des Rollenzapfens und somit auch der Kurvenrolle in der Anschlusskonstruktion ergibt.

Bei einer besonders bevorzugten Ausführungsform ist das Betätigungselement eine Schraube, welche in einer vom Bund ausgehenden axialen Bohrung mit Innengewinde angeordnet ist.

Nach einer vorteilhaften Ausführungsform ist das Spreizmedium fest und in einem gewissen Maße elastisch. Beispielsweise könnte ein Kunststoff zum Einsatz kommen. Andere Ausführungsformen verwenden ein flüssiges Medium, wie zum Beispiel eine Hydraulikflüssigkeit. Das Spreizmedium muss im Wesentlichen eine Anforderung erfüllen, es muss durch den Kolben derart zusammenpressbar sein, dass durch die dabei entstehende Druckkraft eine Aufweitung des Schaftendes realisierbar ist. Das Spreizmedium sollte auch so beschaffen sein, dass zumindest ein Teil der Druckkraft dauerhaft aufrechterhalten bleibt, um eine Rückbiegung der Schaftenden in die nicht aufgeweitete Position zu verhindern.

Weiterhin hat es sich als zweckmäßig erwiesen, wenn in den Randbereichen des Bundes zwei Bohrungen mit einem Versatz zueinander eingebracht sind. Hierbei hat es sich als günstig erwiesen, wenn die Bohrungen einander gegenüberliegend angeordnet sind. In die Bohrungen können bei der Montage geeignete Werkzeuge eingeführt werden, um ein Mitdrehen des Rollenzapfens beim Anziehen der auf das Spreizmedium einwirkenden Schraube zu verhindern.

Bei einer vorteilhaften Ausführungsform kann über die axiale Bohrung der als Betätigungsmittel dienenden Schraube außerdem ein Zuführen von Schmiermittel erfolgen. In diesem Zusammenhang hat es sich als besonders zweckmäßig erwiesen, wenn die Kurvenrolle weiterhin eine radiale Schmierlochbohrung aufweist, wobei die radiale Schmierlochbohrung mit der axialen Bohrung in Verbindung steht. Auf diese Weise kann eine besonders einfache und gute Schmierung der Wälzkörper von der Montagevorderseite der Kurvenrolle aus erfolgen.

Zur Lösung der erfindungsgemäßen Aufgabe dient andererseits auch eine Kurvenrolle gemäß dem beigefügten Anspruch 9. Diese Variante der erfindungsgemäßen Kurvenrolle zeichnet sich dadurch aus, dass der Rollenzapfen eine kegelige Bohrung aufweist, wobei sich die Bohrung vom Bund ausgehend bis zum vom Bund weggerichtetem Schaftende erstreckt. Die Spitze des Konus ist dabei vom Bund weg gerichtet. In der Bohrung ist ein Kegelstift angeordnet, welcher vorzugsweise eine geringere Länge als die Bohrung aufweist.

Mit dieser erfindungsgemäßen Lösung kann die Montage von Kurvenrollen weiterhin vereinfacht werden. Die benötigten Bauteile werden reduziert, was zu wesentlichen Kosteneinsparungen führt. Herkömmliche Kurvenrollen müssen nur geringfügig modifiziert werden, und zwar muss lediglich eine kegelige Bohrung in den Rollenzapfen eingebracht werden und in diese ein entsprechender Kegelstift eingeführt werden. Zur Montage wird mit einem geeigneten Werkzeug auf den Kegelstift eingeschlagen, welcher hierdurch in Richtung Schaftende verschoben wird. Dabei kommt es zum Aufweiten des Schaftes, wodurch sich ein fester Sitz der Kurvenrolle in der Anschlusskonstruktion ergibt.

Als besonders vorteilhaft hat es sich erwiesen, wenn das vom Bund weggerichtete Schaftende mit mehreren Schlitzen versehen ist. Durch die Schlitze wird das Aufweiten des Schaftdurchmessers zusätzlich unterstützt. Außerdem reduziert sich die Gefahr eines Materialrisses, der unkontrolliert bei zu großen Materialspannungen entstehen und die Betriebssicherheit gefährden könnte.

Bei einer weiteren vorteilhaften Ausführungsform dient die kegelige Bohrung zum Zuführen von Schmiermittel. Zweckmäßig ist es, wenn die Kurvenrolle wiederum mit einer radialen Schmierlochbohrung versehen ist, die mit der kegeligen Bohrung in Verbindung steht.

Bei einer besonders bevorzugten Ausführungsform der erfindungsgemäßen Kurvenrolle weist der Schaft auf seiner äußeren Mantelfläche Einkerbelemente auf. Während des Befestigungsvorganges werden die Einkerbelemente in die Oberfläche der Innenwandung des Sackloches getrieben, wodurch die Belastbarkeit der Befestigung des Rollenzapfens in dem Sackloch der Anschlusskonstruktion nochmals erhöht ist. Die Einkerbelemente auf dem Außenmantel der Klemmhülse sind bevorzugt durch Haken oder durch umlaufende Grate gebildet. Die Einkerbelemente können durch eine Oberflächenbearbeitung der Klemmhülse, beispielsweise durch ein Rändeln, ausgebildet werden. Die Einkerbelemente können auch in Form kleiner Spitzen oder in Form einer aufgerauten Materialoberfläche gebildet sein. Alternativ oder ergänzend können auch zusätzliche Elemente in Form von kleine Haken oder Spitzen in die Oberfläche der Klemmhülse eingebracht sein. Die Ausführung des Schaftes mit Einkerbelementen ist sowohl für erfindungsgemäße Kurvenrollen mit einem Spreizmedium als auch für erfindungsgemäße Kurvenrollen mit einem Kegelstift vorteilhaft.

Weitere Vorteile, Einzelheiten und Weiterbildungen der vorliegenden Erfindung ergeben sich aus der nachfolgenden Beschreibung bevorzugter Ausführungsformen, unter Bezugnahme auf die Zeichnung. Es zeigen:
Fig. 1 eine erfindungsgemäße Kurvenrolle gemäß einer ersten Ausführungsform in einer Schnittdarstellung;
Fig. 2 eine erfindungsgemäße Kurvenrolle gemäß einer zweiten Ausführungsform in einer Schnittdarstellung;

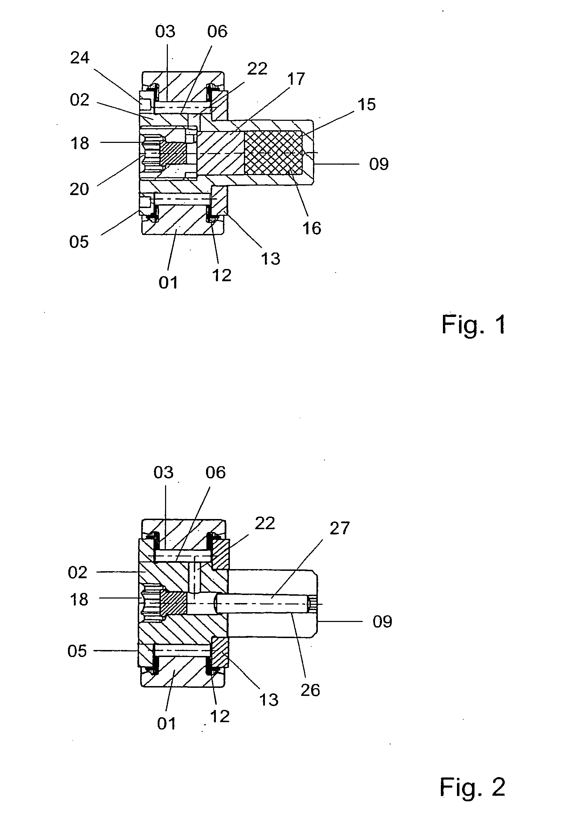

Fig. 1 zeigt eine erste Ausführungsform einer erfindungsgemäßen Kurvenrolle in einer Schnittdarstellung. Die dargestellte Kurvenrolle besteht aus einem Außenring 01, einem Rollenzapfen 02 und zwischen Außenring 01 und Rollenzapfen 02 angeordneten Wälzkörpern 03. Der Rollenzapfen 02 umfasst einen einen Bund 05 und eine Laufbahn 06 aufweisenden vorderen Abschnitt sowie einen Schaft 09, der sich in Achsrichtung an den vorderen Abschnitt anschließt. Der Außenring 01 ist über die Wälzkörper 03 drehbar auf dem den Bund 05 und die Laufbahn 06 aufweisenden Abschnitt gelagert. Der Außenring 01 weist an seinen Enden Borde 12 auf, die die Laufbahn der Wälzkörper 03 in axialer Richtung begrenzen. An die Stirnseite der Wälzkörper 03 schließt sich ein Anlaufring 13 an, der fest mit dem Schaft 09 des Rollenzapfens 02 verbunden ist.

Der Schaft 09 besitzt einen sich durch den gesamten Schaft 09 in axialer Richtung erstreckenden Hohlraum 15, der in dem vom Bund 05 weggerichteten Endbereich des Schaftes 09 mit einem Spreizmedium 16 gefüllt ist. Das Spreizmedium kann entweder fest und dabei vorzugsweise elastisch oder aber flüssig sein. Prinzipiell denkbar wäre auch der Einsatz eines Gases als Spreizmedium, jedoch lassen sich durch Gase aufgrund der Kompressionsfähigkeit kaum die nötigen Druckkräfte aufbauen. In dem Hohlraum 15 ist weiterhin ein Kolben 17 angeordnet, welcher vom Bund 05 ausgehend vor dem Medium 16 angeordnet ist. Der Kolben 17 steht mit einem Betätigungsmittel in Verbindung, welches bei der hier dargestellten Ausführungsform eine Schraube 18 umfasst. Die Schraube 18 ist in einer vom Bund 05 ausgehenden axialen Bohrung 20 mit Innengewinde angeordnet.

Die axiale Bohrung 20 dient gleichzeitig auch zum Zuführen von Schmiermittel von der Bundseite der Kurvenrolle. Zusätzlich zur axialen Bohrung 20 weist der Rollenzapfen noch eine radiale Schmierlochbohrung 22 auf. Die radiale Schmierlochbohrung 22 steht mit der axialen Bohrung 20 in Verbindung. Mittels beider Bohrungen 20, 22 erfolgt die Schmierung der Wälzkörper 03.

Die Montage der Kurvenrolle in einer Anschlusskonstruktion erfolgt folgendermaßen. Zunächst wird die Kurvenrolle in die Sacklochbohrung bzw. Durchgangsbohrung der Anschlusskonstruktion platziert. Der Kolben 17 befindet sich zu diesem Zeitpunkt in einer Position in der auf das Spreizmedium 16 im Wesentlichen kein Druck ausgeübt wird. Der Schaftendbereich ist daher nicht aufgeweitet und kann problemlos in die Bohrung der Anschlusskonstruktion eingeführt werden. Die Schraube 18 wird im Anschluss daran tiefer in die Bohrung 22 eingeschraubt, wobei sie den Kolben 17 in Richtung Spreizmedium 16 verschiebt. Um beim Einschrauben der Schraube 18 ein Mitdrehen der Kurvenrolle zu verhindern, hat es sich als günstig erwiesen, wenn in die Randbereiche des Bundes 05 zwei zusätzliche Haltebohrungen 24 eingebracht sind. In diese Haltebohrungen 24 kann ein geeignetes Werkzeug eingeführt werden, um beim Einschrauben der Schraube 18 entsprechend gegenhalten zu können. Ein Mitdrehen der Kurvenrolle kann auf diese Weise wirksam vermieden werden. Durch die Verschiebung des Kolbens 17 wird das Spreizmedium 16 zusammengepresst, wobei auf den Endbereich des Schaftes 09 eine Druckkraft ausgeübt wird, welche ein Aufweiten dieses Schaftbereichs bewirkt, wodurch es zum Verklemmen des Schaftes in der Sacklochbohrung oder Durchgangsbohrung der Anschlusskonstruktion kommt. Die Kurvenrolle ist nun fest und sicher mit der Anschlusskonstruktion verbunden.

Die Aufweitung des Schaftes 09 durch das Spreizmedium ist natürlich nur dann möglich, wenn die ausgeübte Druckkraft groß genug ist, um eine Querschnittserweiterung des Schaftes 09 zu bewirken. Der Endbereich des Schaftes ist dazu beispielsweise aus einem dehnbaren, vorzugsweise elastischen Material gefertigt. Ebenso ist es möglich, das Material in diesem Abschnitt zu schlitzen, insbesondere wenn der Schaft 09 aus Stahl gefertigt ist. Alternativ dazu ist es möglich, Öffnungen im Schaft vorzusehen, durch welche das Spreizmittel 16 hindurch gepresst wird und dadurch an der Wandung der Sacklochbohrung zu Anlage kommt. In den letztgenannten Fällen darf das Spreizmittel nicht zu flüssig sein, damit es nicht aus der Sacklochbohrung hinausgepresst wird. Das Spreizmittel könnte jedoch ein zähflüssiger Kleber sein, der eine Klebeverbindung herstellt, was zu einer besonders dauerfesten Verbindung führt.

Fig. 2 zeigt eine andere Ausführungsform der erfindungsgemäßen Kurvenrolle in einer Schnittdarstellung. Die erfindungsgemäße Kurvenrolle besteht wiederum aus einem Außenring 01, einem Rollenzapfen 02 und zwischen Außenring 01 und Rollenzapfen 02 angeordneten Wälzkörpern 03. Der Rollenzapfen 02 umfasst einen einen Bund 05 und eine Laufbahn 06 aufweisenden vorderen Abschnitt sowie einen Schaft 09. Der Außenring 01 ist über die Wälzkörper 03 drehbar auf dem den Bund 05 und die Laufbahn 06 aufweisenden Abschnitt gelagert. Der Außenring 01 weist an seinen Enden Borde 12 auf, die die Laufbahn der Wälzkörper 03 in axialer Richtung begrenzen. An die Stirnseite der Wälzkörper 03 schließt sich ein Anlaufring 13 an, der fest mit dem Schaft 09 des Rollenzapfens 02 verbunden ist.

In den Rollenzapfen 02 ist eine vorzugsweise kegelige Bohrung 26 eingebracht. Die kegelige Bohrung 26 erstreckt sich dabei vom Bund 05 ausgehend bis zum vom Bund 05 weg gerichteten Endbereich des Schaftes 09. Die Spitze des Konus ist vom Bund 05 weg gerichtet. In der kegeligen Bohrung 26 ist ein Kegelstift 27 angeordnet. Der Kegelstift 27 hat in der hier gezeigten Bauform eine geringere Länge als die kegelige Bohrung 26. Der Kegelstift 27 und die kegelige Bohrung 26 sind in ihrer Form so aufeinander abgestimmt, dass es bei einer axialen Verschiebung des Kegelstifts in Richtung zum freien Ende des Schaftes 09 zu einer Keilwirkung der sich gegenüberliegenden Flächen kommt, wodurch das Schaftende aufgeweitet wird. Dies ist auch möglich, wenn die Bohrung 26 zylindrisch ausgeführt ist. Dem Fachmann sind die Zusammenhänge an Keilflächen (z.B. Eigenhemmung, Blockade) hinlänglich bekannt, sodass hier keine näheren Dimensionierungshinweise gegeben werden müssen.

Über die kegelige Bohrung 26 erfolgt außerdem die Zuführung von Schmiermittel. Hierzu hat es sich als vorteilhaft erwiesen, wenn der Rollenzapfen 02 zusätzlich noch mit einer radialen Schmierlochbohrung 22 versehen ist, welche mit der kegeligen Bohrung 26 verbunden ist.

Das vom Bund 05 weg gerichtete Schaftende des Schaftes 09 weist mindestens einen, vorzugsweise aber mehrere am Umfang verteilte Axialschlitze auf (nicht gezeigt).

Die Montage der Kurvenrolle gemäß der in Fig. 2 gezeigten Ausführungsform in einer Anschlusskonstruktion erfolgt wie im Folgenden beschrieben. Zunächst wird der Schaft 09 der Kurvenrolle in die Sacklochbohrung bzw. Durchgangsbohrung der Anschlusskonstruktion platziert. Der Kegelstift 27 ist zu diesem Zeitpunkt von dem zum Schaftende gelegenen Ende der kegeligen Bohrung 26 beabstandet bzw. in einer Position, in welcher keine Spreizkräfte auf die Innenseiten des Schaftes ausgeübt werden. Anschließend wird mittels eines geeigneten Werkzeugs, welches von der Bundseite in die kegelige Bohrung 26 eingeführt wird, auf den Kegelstift 27 eingeschlagen. Hierdurch bewegt sich der Kegelstift 27 zum Ende der kegeligen Bohrung 26 hin. Dabei wird das Schaftende aufgeweitet. Die Aufweitung des Schaftendes wird durch die ins Schaftende eingebrachten Schlitze zusätzlich unterstützt. Die Kurvenrolle ist im Anschluss daran fest und sicher mit der Anschlusskonstruktion verbunden.

Anschließend kann der Kegelstift 27 durch eine Schraube 18 gesichert werden. Alternativ oder ergänzend ist es möglich, über die Schraube 18 eine axial gerichtete Kraft auf den Kegelstift 27 auszuüben, um diesen in der kegeligen Bohrung 26 (weiter) zu verschieben. Die Bohrung 26 kann am Schaftende offen sein, damit der Kegelstift aus dem Schaft 09 in die länger auszubildende Sacklochbohrung austreten kann, wenn dies für eine größere Aufweitung des Schaftendes nötig ist.

Obwohl sich die erfindungsgemäße Kurvenrolle besonders gut zur Montage in einer Sacklochbohrung eignet, kann sie natürlich genauso gut auch in Durchgangsbohrungen befestigt werden.

### Bezugszeichenliste

- 01: Außenring
- 02: Rollenzapfen
- 03: Wälzkörper
- 04: -
- 05: Bund
- 06: Laufbahn
- 07: -
- 08: -
- 09: Schaft
- 10: -
- 11: -
- 12: Bord
- 13: Anlaufring
- 14: -
- 15: Hohlraum
- 16: Spreizmedium
- 17: Kolben
- 18: Schraube
- 19: -
- 20: axiale Bohrung
- 21: -
- 22: radiale Schmierlochbohrung
- 23: -
- 24: Haltebohrungen im Randbereich des Bundes
- 25: -
- 26: kegelige Bohrung
- 27: Kegelstift

## Patentansprüche

1. Kurvenrolle zur Befestigung in einer Sacklochbohrung oder einer Durchgangsbohrung einer Anschlusskonstruktion umfassend einen Außenring (01), einen Rollenzapfen (02) mit einem Bund (05), einer Laufbahn (06) und einem Schaft (09), sowie zwischen Außenring (01) und Rollenzapfen (02) angeordnete Wälzkörper (03), **dadurch gekennzeichnet, dass** der Schaft (09) einen sich in axialer Richtung erstreckenden Hohlraum (15) aufweist, wobei dieser Hohlraum (15) zumindest in dem vom Bund (05) weggerichteten Endbereich des Schaftes (09) mit einem Spreizmedium (16) gefüllt ist, und dass in dem Hohlraum (15) ein in axialer Richtung verschiebbarer Kolben (17) angeordnet ist, wobei der Kolben (17) vom Bund (05) ausgehend vor dem Spreizmedium (16) angeordnet ist, und dass der Kolben (17) mit einem Betätigungsmittel (18) in Verbindung steht, über welches der Kolben (17) axial verschiebbar ist.

2. Kurvenrolle nach Anspruch 1, **dadurch gekennzeichnet, dass** das Betätigungsmittel eine Schraube (18) ist, wobei die Schraube (18) in einer vom Bund (05) ausgehenden axialen Bohrung (20) mit Innengewinde angeordnet ist.

3. Kurvenrolle nach Anspruch 1 oder 2, **dadurch gekennzeichnet, dass** sich der Hohlraum (15) durch den gesamten Schaft (09) erstreckt, jedoch an dem vom Bund (05) weggerichteten Ende verschlossen ist.

4. Kurvenrolle nach einem der Ansprüche 1 bis 3, **dadurch gekennzeichnet, dass** das Spreizmedium (16) fest und elastisch ist.

5. Kurvenrolle nach einem der Ansprüche 1 bis 3, **dadurch gekennzeichnet, dass** das Spreizmedium (16) flüssig ist.

6. Kurvenrolle nach einem der Ansprüche 1 bis 5, **dadurch gekennzeichnet, dass** in den Randbereichen des Bundes (05) zwei oder mehr Haltebohrungen (24) eingebracht sind, welche sich vorzugsweise parallel zur axialen Bohrung (20) erstrecken.

7. Kurvenrolle nach einem der Ansprüche 2 bis 6, **dadurch gekennzeichnet, dass** die axiale Bohrung (20) weiterhin zum Zuführen von Schmiermittel zu den Wälzkörpern (03) ausgebildet ist.

8. Kurvenrolle nach Anspruch 7, **dadurch gekennzeichnet, dass** sie mindestens eine radiale Schmierlochbohrung (22) aufweist, die in der Laufbahn (06) endet, wobei die radiale Schmierlochbohrung (22) mit der axialen Bohrung (20) in Verbindung steht.

9. Kurvenrolle zur Befestigung in einer Sacklochbohrung oder einer Durchgangsbohrung einer Anschlusskonstruktion umfassend einen Außenring (01), einen Rollenzapfen (02) mit einem Bund (05), einer Laufbahn (06) und einem Schaft (09), sowie zwischen Außenring (01) und Rollenzapfen (02) angeordnete Wälzkörper (03), **dadurch gekennzeichnet, dass** der Rollenzapfen (02) eine Bohrung (26) aufweist, wobei sich die Bohrung (26) vom Bund (05) ausgehend bis zum vom Bund (05) weg gerichtetem Schaftende erstreckt, und dass in der Bohrung (26) ein axial verschiebbarer Kegelstift (27) angeordnet ist.

10. Kurvenrolle nach Anspruch 9, **dadurch gekennzeichnet, dass** die Bohrung (26) zumindest im Bereich des freien Endes des Schaftes (09) kegelförmig ist, wobei die Spitze des dadurch geformten Hohlkonus vom Bund (05) weg gerichtet ist.

11. Kurvenrolle nach Anspruch 9 oder 10, **dadurch gekennzeichnet, dass** der Kegelstift (27) eine geringere Länge als die Bohrung (26) aufweist.

12. Kurvenrolle nach einem der Ansprüche 9 bis 11, **dadurch gekennzeichnet, dass** das vom Bund (05) weg gerichtete Schaftende mindestens einen, vorzugsweise mehrere achsparallel verlaufende Schlitze aufweist.

13. Kurvenrolle nach einem der Ansprüche 10 bis 12, **dadurch gekennzeichnet, dass** die kegelige Bohrung (26) weiterhin als Zuführöffnung für Schmiermittel ausgeformt ist.

14. Kurvenrolle nach Anspruch 13, **dadurch gekennzeichnet, dass** sie mindestens eine radiale Schmierlochbohrung (22) aufweist, die in der Laufbahn (06) endet, wobei die radiale Schmierlochbohrung (22) mit der kegeligen Bohrung (26) in Verbindung steht.

15. Kurvenrolle nach einem der Ansprüche 1 bis 14, **dadurch gekennzeichnet, dass** der Schaft (09) auf seinem äußeren Mantel Einkerbelemente aufweist.

16. Kurvenrolle nach Anspruch 15, **dadurch gekennzeichnet, dass** die Einkerbelemente durch Haken oder durch umlaufende Grate gebildet sind.

## Claims

1. Guide roller for fixing in a blind hole or a throughbore of a connecting structure, comprising an outer ring (01), a roller journal (02) with a collar (05), with a raceway (06) and with a shank (09), and also rolling bodies (03) arranged between the outer ring (01) and roller journal (02), **characterized in that** the shank (09) has an axially extending cavity (15), this cavity (15) being filled with a spreading medium (16) at least **in that** end region of the shank (09) which is directed away from the collar (05), and **in that** an axially displaceable piston (17) is arranged in the cavity (15), the piston (17) being arranged, starting from the collar (05), in front of the spreading medium (16), and **in that** the piston (17) is connected to an actuation means (18), via which the piston (17) can be displaced axially.

2. Guide roller according to Claim 1, **characterized in that** the actuation means is a screw (18), the screw (18) being arranged in an axial bore (20) emanating from the collar (05) and having an internal thread.

3. Guide roller according to Claim 1 or 2, **characterized in that** the cavity (15) extends through the entire shank (09), but is closed at the end directed away from the collar (05).

4. Guide roller according to one of Claims 1 to 3, **characterized in that** the spreading medium (16) is solid and elastic.

5. Guide roller according to one of Claims 1 to 3, **characterized in that** the spreading medium (16) is liquid.

6. Guide roller according to one of Claims 1 to 5, **characterized in that** two or more holding bores (24) are introduced in the marginal regions of the collar (05) and extend preferably parallel to the axial bore (20).

7. Guide roller according to one of Claims 2 to 6, **characterized in that** the axial bore (20) is designed, furthermore, for feeding lubricant to the rolling bodies (03).

8. Guide roller according to Claim 7, **characterized in that** it has at least one radial lubricating hole bore (22) which ends in the raceway (06), the radial lubricating hole bore (22) being connected to the axial bore (20).

9. Guide roller for fixing in a blind hole or a through bore for a connecting structure, comprising an outer ring (01), a roller journal (02) with a collar (05), with a raceway (06) and with a shank (09), and also rolling bodies (03) arranged between the outer ring (01) and roller journal (02), **characterized in that** the roller journal (02) has a bore (26), the bore (26) extending, starting from the collar (05), as far as the shank end directed away from the collar (05), and **in that** an axially displaceable taper pin (27) is arranged in the bore (26).

10. Guide roller according to Claim 9, **characterized in that** the bore (26) is tapered at least in the region of the free end of the shank (09), the apex of the hollow cone thereby formed being directed away from the collar (05).

11. Guide roller according to Claim 9 or 10, **characterized in that** the taper pin (27) has a smaller length than the bore (26).

12. Guide roller according to one of Claims 9 to 11, **characterized in that** the shank end directed away from the collar (05) has at least one slot, preferably a plurality of slots, running axially parallel.

13. Guide roller according to one of Claims 10 to 12, **characterized in that** the tapered bore (26) is shaped, furthermore, as a feed port for lubricant.

14. Guide roller according to Claim 13, **characterized in that** it has at least one radial lubricating hole bore (22) which ends in the raceway (06), the radial lubricating hole bore (22) being connected to the tapered bore (26).

15. Guide roller according to one of Claims 1 to 14, **characterized in that** the shank (09) has indentation elements on its outer surface area.

16. Guide roller according to Claim 15, **characterized in that** the indentation elements are formed by hooks or by peripheral burrs.

## Revendications

1. Galet de came destiné à être fixé dans un trou borgne ou dans un trou débouchant d'une construction de raccordement comprenant une bague extérieure (01), un tourillon de galet (02) avec un épaulement (05), une piste de roulement (06) et un arbre (09), ainsi que des corps de roulement (03) disposés entre la bague extérieure (01) et le tourillon de galet (02), **caractérisé en ce que** l'arbre (09) présente une cavité (15) s'étendant dans la direction axiale, cette cavité (15) étant remplie au moins dans la région d'extrémité de l'arbre (09) orientée à l'écart de l'épaulement (05) avec un milieu d'écartement (16), et **en ce que** dans la cavité (15) est disposé un piston (17) pouvant être déplacé dans la direction axiale, le piston (17) étant disposé à partir de l'épaulement (05) avant le milieu d'écartement (16) et **en ce que** le piston (17) est en liaison avec un moyen d'actionnement (18) par le biais duquel le piston (17) peut être déplacé axialement.

2. Galet de came selon la revendication 1, **caractérisé en ce que** le moyen d'actionnement est une vis (18), la vis (18) étant disposée dans un alésage axial (20) partant de l'épaulement (05) avec un filetage interne.

3. Galet de came selon la revendication 1 ou 2, **caractérisé en ce que** la cavité (15) s'étend à travers tout l'arbre (09), mais est fermée à l'extrémité orientée à l'écart de l'épaulement (05).

4. Galet de came selon l'une quelconque des revendications 1 à 3, **caractérisé en ce que** le milieu d'écartement (16) est solide et élastique.

5. Galet de came selon l'une quelconque des revendications 1 à 3, **caractérisé en ce que** le milieu d'écartement (16) est fluide.

6. Galet de came selon l'une quelconque des revendications 1 à 5, **caractérisé en ce que** dans les régions de bord de l'épaulement (05) sont pratiqués deux ou plus de deux trous de retenue (24) qui s'étendent de préférence parallèlement à l'alésage axial (20).

7. Galet de came selon l'une quelconque des revendications 2 à 6, **caractérisé en ce que** l'alésage axial (20) est réalisé en outre de manière à acheminer du lubrifiant aux corps de roulement (03).

8. Galet de came selon la revendication 7, **caractérisé en ce qu'**il présente au moins un trou de lubrification radial (22) qui se termine dans la piste de roulement (06), le trou de lubrification radial (22) étant en liaison avec l'alésage axial (20).

9. Galet de came destiné à être fixé dans un trou borgne ou dans un trou débouchant d'une construction de raccordement comprenant une bague extérieure (01), un tourillon de galet (02) avec un épaulement (05), une piste de roulement (06) et un arbre (09), ainsi que des corps de roulement (03) disposés entre la bague extérieure (01) et le tourillon de galet (02), **caractérisé en ce que** le tourillon de galet (02) présente un alésage (26), l'alésage (26) s'étendant à partir de l'épaulement (05) jusqu'à l'extrémité de l'arbre orientée à l'écart de l'épaulement (05), et **en ce qu'**une goupille conique (27) déplaçable axialement est disposée dans l'alésage (26).

10. Galet de came selon la revendication 9, **caractérisé en ce que** l'alésage (26) est de forme conique au moins dans la région de l'extrémité libre de l'arbre (09), la pointe du cône creux ainsi formé étant orientée à l'écart de l'épaulement (05).

11. Galet de came selon la revendication 9 ou 10, **caractérisé en ce que** la goupille conique (27) présente une plus petite longueur que l'alésage (26).

12. Galet de came selon l'une quelconque des revendications 9 à 11, **caractérisé en ce que** l'extrémité d'arbre orientée à l'écart de l'épaulement (05) présente au moins une, et de préférence plusieurs, fentes s'étendant avec leurs axes parallèles.

13. Galet de came selon l'une quelconque des revendications 10 à 12, **caractérisé en ce que** l'alésage conique (26) est en outre formé en tant qu'ouverture d'alimentation pour du lubrifiant.

14. Galet de came selon la revendication 13, **caractérisé en ce qu'**il présente au moins un trou de lubrification radial (22) qui se termine dans la piste de roulement (06), le trou de lubrification radial (22) étant en liaison avec l'alésage conique (26).

15. Galet de came selon l'une quelconque des revendications 1 à 14, **caractérisé en ce que** l'arbre (09) présente sur son enveloppe extérieure des éléments d'encoche.

16. Galet de came selon la revendication 15, **caractérisé en ce que** les éléments d'encoche sont formés par des crochets ou par des bavures périphériques.
